# EUROPEAN PATENT APPLICATION

(11) **EP 2 383 463 A1**
(43) Date of publication of application: **02.11.2011**
(21) Application number: 11163773.2
(22) Date of filing: 26.04.2011
(51) Int. Cl.: F03D 1/00

(54) **Rotor support device and method for accessing a drive train of a wind turbine**

(30) Priority: 29.04.2010 US 769788
(71) Applicant: General Electric Company, Schenectady, NY 12345 (US)
(72) Inventor: Nies, Jacob Johannes, 8042 Zwolle (NL)
(74) Representative: Bedford, Grant Richard

(57) **Abstract**

A rotor support device is provided which is adapted for supporting a rotor of a wind turbine (100) while accessing at least one component of said wind turbine (100). The rotor support device includes a hinge (200) comprising a fixed portion (202) (202) and a tiltable portion (203). The fixed portion (202) is adapted for being mounted at a nacelle structure (103) of the wind turbine (100) and the tiltable portion (203) is adapted for holding the rotor of the wind turbine (100) and for being tilted about a hinge axis (201). Furthemore an actuator device (500) is provided which is adapted for pivoting the tiltable portion (203) about the hinge axis (201) between a closed position where a rotor axis (118) coincides with an axis of the drive train (300), and an open position where the rotor is offset from the drive train (300).

## Description

The present disclosure generally relates to a wind turbine having a drive train within a nacelle structure, and in particular relates to a rotor support device for a rotor of a wind turbine. Furthermore, the present invention relates to a method for supporting a rotor of a wind turbine while accessing a drive train of said wind turbine.

Wind turbines are of increasing importance as environmentally safe and reliable energy sources. A wind turbine typically includes a tower and a nacelle structure rotatably arranged atop the tower. In the nacelle structure, a drive train of the wind turbine is housed such that wind energy which has been converted into rotational energy can be transferred into electrical energy.

The drive train of a wind turbine typically includes a rotor shaft, a gearbox and an electrical generator, which are connected to a rotor having at least one rotor blade and a hub. The electrical generator is adapted for converting the mechanical rotational energy from the rotor into electrical energy. Mechanical components of the drive train are subject to maintenance and repair during the lifetime of the entire wind turbine.

In view of the above, according to an aspect of the present invention a rotor support device adapted for supporting a rotor of a wind turbine while accessing at least one component of said wind turbine is provided, the rotor support device including a hinge including a fixed portion and a tiltable portion, said fixed portion being adapted for being mounted at a nacelle structure of said wind turbine and said tiltable portion being adapted for holding said rotor of said wind turbine and for being tilted about a hinge axis, and an actuator device adapted for pivoting the tiltable portion about the hinge axis between a closed position where a rotor axis coincides with an axis of the drive train, and an open position where the rotor is offset from the drive train.

According to another aspect a wind turbine including a rotor having at least one rotor blade and a hub, a drive train, a nacelle structure and a rotor support device adapted for supporting the rotor while accessing at least part of the drive train is provided, the rotor support device including a hinge including a fixed portion and a tiltable portion, said fixed portion being adapted for being mounted at a nacelle structure of said wind turbine and said tiltable portion being adapted for holding said rotor of said wind turbine and for being tilted about a hinge axis, and an actuator device adapted for pivoting the tiltable portion about the hinge axis between a closed position where a rotor axis coincides with an axis of the drive train, and an open position where the rotor is offset from the drive train.

According to yet another aspect a method for accessing at least one component of a drive train of a wind turbine having a rotor and a nacelle structure is provided, the method including the steps of supporting the rotor by means of a hinge including a fixed portion and a tiltable portion, said fixed portion being adapted for being mounted at the machine and said tiltable portion being adapted for holding said rotor, pivoting the tiltable portion about the hinge axis from a closed position where a rotor axis coincides with an axis of the drive train to an open position where the rotor is offset from the drive train, accessing the at least one component of the wind turbine, and pivoting the tiltable portion about the hinge axis from the open position where the rotor is offset from the drive train to the closed position where the rotor axis coincides with the axis of the drive train.

Various exemplary embodiments are according to the dependent claims, the description and the accompanying drawings, in which:
Fig. 1 shows a side view of a wind turbine illustrating a schematic set-up of a wind turbine, according to a typical embodiment;
Fig. 2 exhibits a drive train of a wind turbine including a gearbox for converting a low input rotational speed into a high output rotational speed, a rotor coupling, a rotor lock and an electrical generator;
Fig. 3 is a side view of an upper part of a wind turbine, i.e. a goose neck shaped nacelle structure having a hinge adapted for supporting the rotor of the wind turbine, according to a typical embodiment;
Fig. 4 is a top view of the goose neck shaped nacelle structure of the wind turbine exhibited in Fig. 3, wherein an actuator device for tilting the rotor with respect to a drive train axis is detailed, according to a typical embodiment;
Fig. 5 is a side view of a goose neck shaped nacelle structure shown in Fig. 3, wherein the rotor of the wind turbine has been tilted by approximately 90° about a hinge axis;
Fig. 6 is a top view of the goose neck shaped nacelle structure shown in Fig. 4, wherein the rotor has been tilted towards a lateral side of the nacelle structure by means of the actuator device; and
Fig. 7 is a flowchart illustrating a method for accessing at least one component of a drive train of a wind turbine, according to a typical embodiment.

Reference will now be made in detail to the various exemplary embodiments, one or more examples of which are illustrated in the drawings. Each example is provided by way of explanation and is not meant as a limitation. For example, features illustrated or described as part of one embodiment can be used on or in conjunction with other embodiments to yield yet a further embodiment. It is intended that the present disclosure includes such modifications and variations.

A number of embodiments will be explained below. In this case, identical structural features are identified by identical reference symbols in the drawings. The structures shown in the drawings are not depicted true to scale but rather serve only for the better understanding of the embodiments.

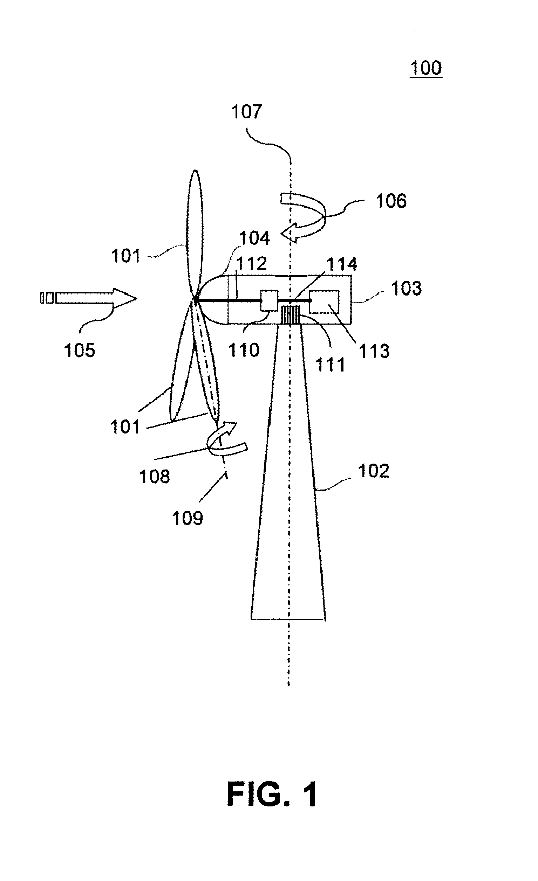

Fig. 1 shows a side view of a wind turbine illustrating a typical set-up of a wind turbine according to a typical embodiment. The wind turbine 100 includes a tower 102, e.g. a tubular tower, and a nacelle structure 103 which is rotatably arranged atop the tower 102. It is noted here that the nacelle structure 103 may include any kind of support structure for the rotor and drive train such as, but not restricted to, a bedplate, a mainframe, a goose neck, etc.

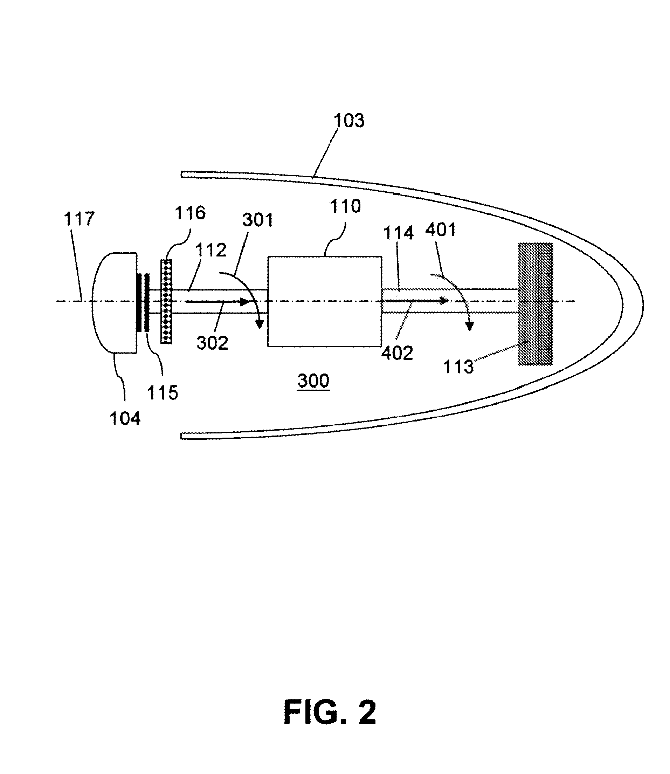

The nacelle structure 103 may be rotated about a vertical axis 107 of the tower 102 by means of a yaw drive system 111. The yaw drive system 111 is capable of adjusting the nacelle structure 103 with respect to an incoming wind direction 105. The nacelle structure 103 houses a drive train of the wind turbine which is detailed herein below with respect to Fig. 2. The wind turbine 100 includes a rotor having at least one rotor blade 101 and a hub 104. The drive train of the wind turbine 100 furthermore includes a rotor shaft 112, a gearbox 110, a gearbox output shaft 114 and an electrical generator 113 which will be described herein below with respect to Fig. 2.

In order to adapt the operation of the wind turbine 100 with respect to a velocity or strength, respectively, of the incoming wind 105, a pitch angle 108 of an individual rotor blade 101 may be adjusted. The pitch angle 108 corresponds to a rotation about a rotor blade axis 109, i.e. about a longitudinal axis of an individual rotor blade 101.

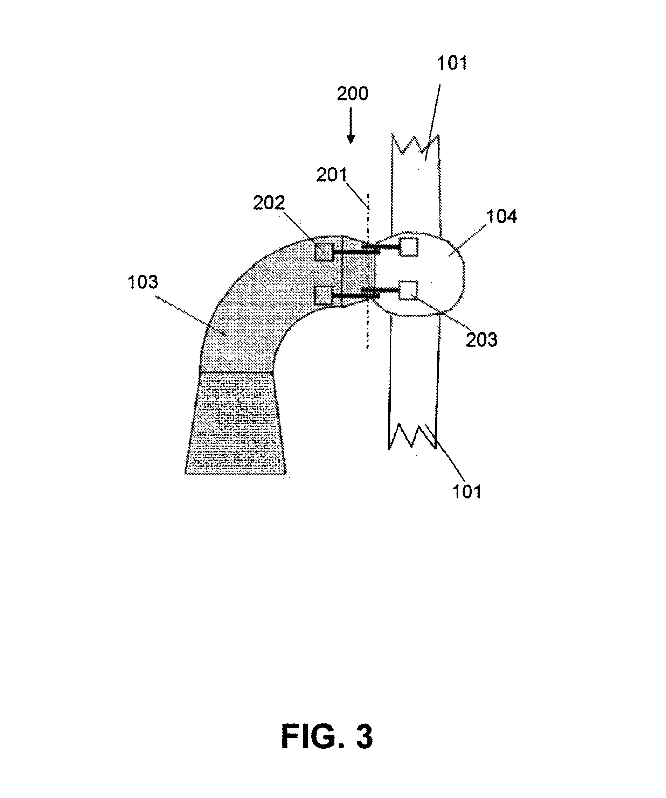

The nacelle structure 103 of the wind turbine 100 may assume different shapes, e.g. a longitudinal cross-sectional shape as the one shown in Fig. 1, a goose neck structured shape as the ones shown in Figs. 3, 4, 5 and 6, or other shapes. It is noted here that the present disclosure is not restricted to a specific shape of the nacelle structure 103.

Fig. 2 illustrates a drive train 300. Components which are arranged along a drive train axis 117 will be described herein below in more detail. It is noted here that, in order to simplify the drawing, the individual rotor blades 101 (see Fig. 1) are not outlined.

The hub 104 of the wind turbine 100 is connected to the rotor shaft 112 by means of a rotor coupling 115. The rotor coupling is adapted for detachable mounting of the hub 104 at the rotor shaft 112. If the hub 104 together with the at least one rotor blade 101 is detached from the other components of the drive train which will be described herein below, the hub 104 together with the at least one rotor blade has to be supported by means of a rotor-supporting device in accordance with a typical embodiment.

The rotor shaft 112 is further provided with a rotor lock 116 which locks a rotation of the rotor shaft 112 in specific cases, e.g. if the hub 104 is detached from the rotor shaft 112. According to the typical embodiment shown in Fig. 2, the rotor shaft 112 is provided as an input shaft for the gearbox 110.

The gearbox 110 is adapted for converting an input torque 302 at a first rotational speed, i.e. at an input rotational speed 301, into a second torque, e.g. an output torque 402 at an output rotational speed 401. As the input shaft of the gearbox 110 is connected with the rotor of the wind turbine 100 (Fig. 1), low rotational speeds prevail. The prevailing low rotational speeds are typically in the range of 12 rpm (rotations per minute) to 30 rpm.

At the output side of the gearbox 110 (high speed side), high rotational speeds are present for driving the electrical generator 113. The high rotational speeds may typically range from 1200 rpm to 1800 rpm for three-stage gear boxes. It is noted here, however, that other gearbox types may be employed which allow higher or lower rotational speeds, i.e. rotational speeds lower than 1200 rpm and rotational speeds larger than 1800 rpm.

The rotor shaft 112 thus is at the low speed side, i.e. at the side where low rotational speeds prevail, the rotor shaft 112 thus being referred to as a low speed input shaft, wherein the gearbox output shaft may be referred to as a high speed output shaft 114 (gearbox output shaft) which may be connected to the electrical generator 113.

Furthermore, in Fig. 2, an outer shape of the nacelle structure 103 is indicated. The indicated goose neck shaped nacelle structure 103 will be described in detail with respect to the following figures. It can be already seen in Fig. 2, however, that such kind of goose neck shaped nacelle structure 103 housing the drive train 300 results in a specific assembly/disassembly order for the individual components of the drive train 100. It is thus an issue that the hub 104 of the wind turbine together with the individual rotor blades 101 is removed before any components arranged to the right side of the hub 104 may be removed from the nacelle structure 103. This situation occurs typically in case of maintenance, service and repair work.

By disconnecting the rotor coupling 115, the hub 104 is able to swing away from the rotor axis 112, such that the hub 104 and the rotor shaft 112 may be separated from each other.

Fig. 3 is a side view of an upper part of a wind turbine 100, according to a typical embodiment. The nacelle structure 103 of the wind turbine 100 has a goose neck structure, as viewed from a lateral side. The hub 104 includes two rotor blades 101 which are only schematically shown.

It is noted here that, albeit two or three rotor blades 101 are shown, the wind turbine according to a typical embodiment may include any appropriate number of rotor blades 101.

The hub 104 and the nacelle structure 103 are connected to each other by means of a hinge 200 according to a typical embodiment. The hinge 200 includes a fixed hinge portion 202 and a tiltable hinge portion 203. The tiltable hinge portion 203 may be rotated about a hinge axis 201 with respect to the fixed hinge portion 202. The fixed hinge portion 202 is mounted at the nacelle structure, wherein the tiltable hinge portion is mounted at the hub 104. Furthermore, the hinge 200 may be provided as at least a part of a lifting lug. Typically, the fixed hinge portion 202 may be mounted to the bedplate, which forms a part of the nacelle structure as mentioned above. The fixed hinge portion 202 is even directly mounted to the bedplate in some embodiments. The bedplate, which is also referred to as a bedframe or a mainframe, may include any kind of support structure for the rotor and drive train. Thus, the bedplate is capable of carrying the weight of the hub 104 with the tiltable hinge portion 203 attached thereto. In order to support the rotor, the fixed hinge portion 202 may even be an integral portion of the bedplate or mainframe in some embodiments. Furthermore, as shown in Fig. 3 the fixed hinge portion 202 may also be mounted to a gooseneck 103, even directly or via a support structure within gooseneck 103.

It is noted here, however, that a mounting or fixing of the tiltable hinge portion 203 at the hub 104 is performed during maintenance, service or repair work and not during a normal operation of the wind turbine 100. The hinge 200 thus includes the fixed hinge portion and the tiltable hinge portion 203, wherein the fixed hinge portion 202 is adapted for being mounted at the nacelle structure 103 of the wind turbine, and the tiltable portion 203 is adapted for holding the rotor of the wind turbine 100 and for being tilted at the hinge axis 201.

In accordance with yet another typical embodiment the tiltable hinge portion 203 may be adapted for being mounted at the nacelle structure 103 of the wind turbine 100, and the fixed portion 202 may be adapted for holding the rotor of the wind turbine 100. Furthermore it is noted here that the at least one hinge 200 is mounted in such a way that it allows a free rotation of the rotor during normal operation. None, only one or both the hinge portions 202, 203 may remain attached during that normal operation.

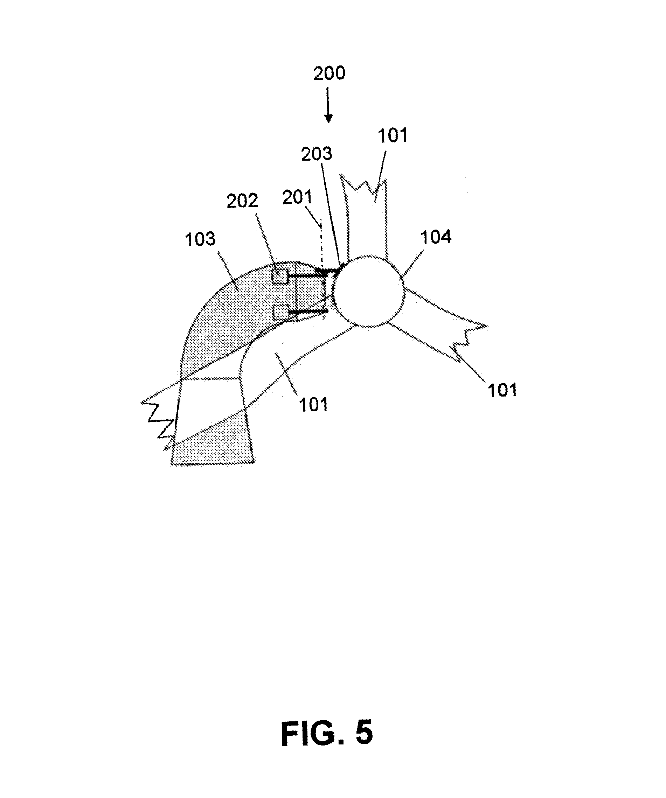

It is noted here that Fig. 3 shows a situation where the rotor is not tilted with respect to the rotor shaft 112 (see Fig. 2) wherein Fig. 5, which will be described herein below, shows a situation where the rotor is tilted by approximately 90° with respect to the rotor shaft 112.

Such kind of goose neck frame structure which might include a bed plate (the goose neck structure being shown in Fig. 3) results in a specific kind of disassembling of the drive train of the wind turbine 100, i.e. components to be removed from the drive train are removed from the front side, i.e. from the side of the hub 104 of the wind turbine 100.

The rotor of the wind turbine 100, e.g. the hub 104 together with the individual rotor blades 101, may then remain up-tower, i.e. it may not be dropped to the ground or attached to a crane in case the components of the drive train of the wind turbine are removed. In such a situation, the hub 104 is supported by the rotor support device in accordance with a typical embodiment.

The hinge 200 of the rotor support device may be mounted in a way that allows a center of gravity of the rotor to remain at the same height while the rotor is tilted away from the drive train. In order to control the motion of the rotor assembly and in order to hold it in an end position, an actuator device which will be described herein below is provided. The hinge 200 may be integrated in the design of the nacelle structure 103. Furthermore, mounting positions may be manufactured in order to arrange the hinge 200 at a time of need. In accordance with another embodiment, the hinge 200 may be clamped to the nacelle structure 103 and the hub 104, respectively. Furthermore, mounting positions may be provided for a support crane or sliding bars that permit the removal of equipment from the nacelle structure 103.

The hinge axis 201 may be oriented vertically, wherein the actuator device is adapted for pivoting the tiltable hinge portion 203 towards a lateral side of the nacelle structure 103. Furthermore, it is possible that the hinge axis 201 is oriented horizontally, wherein the actuator device is adapted for pivoting the tiltable hinge portion 203 towards at least one of a top side and a bottom side of the nacelle structure 103.

It is noted here that the present disclosure is not restricted to a vertical or horizontal orientation of the hinge axis 202. Rather, the hinge axis may assume any suitable orientation such that the hub 104 of the wind turbine 100 may swing away from the drive train structure.

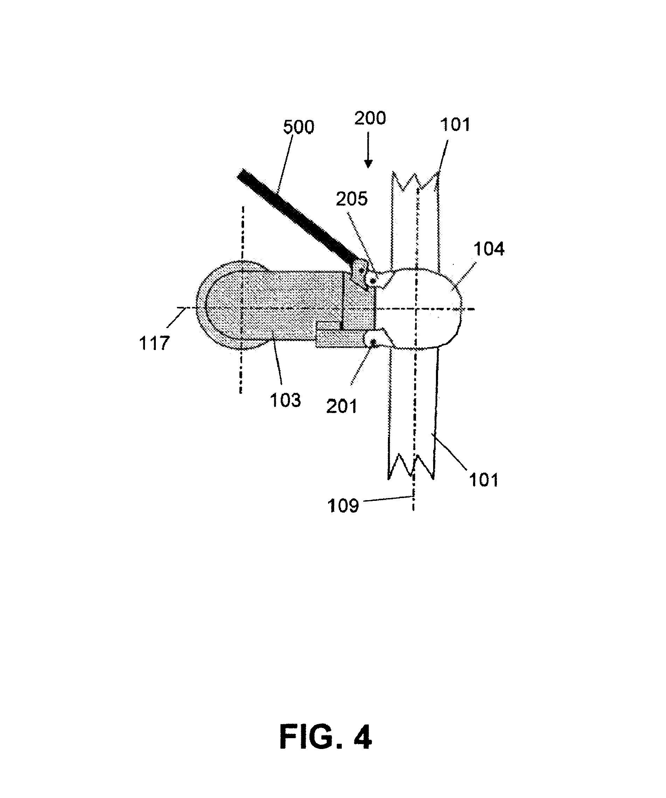

Fig. 4 illustrates the goose neck shaped nacelle structure viewed from the top. As shown in Fig. 3, also Fig. 4 shows the situation where the hub 104 together with the rotor blades 101 is in an alignment with the rotor axis 117, i.e. the hinge 200 is closed.

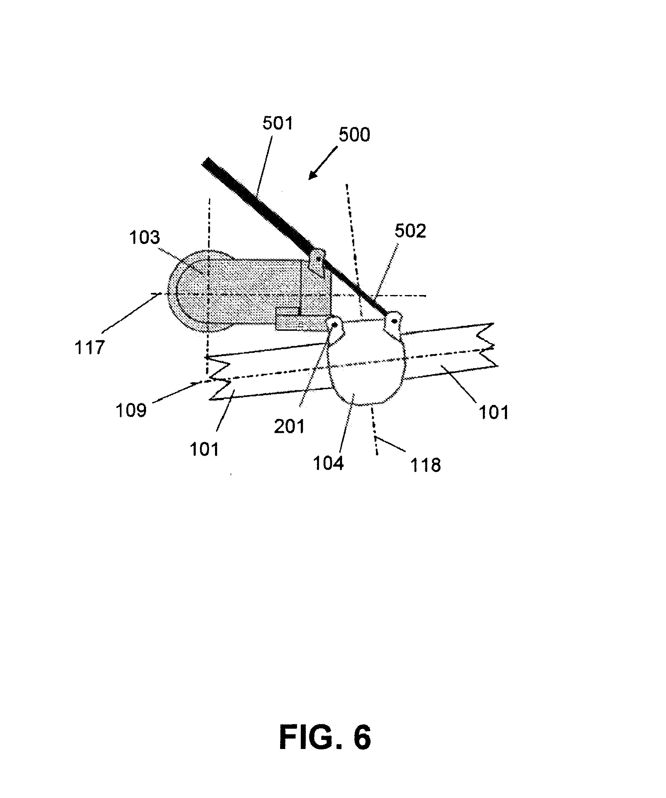

A hinge lock 205 locks the tiltable part of the rotor, i.e. the hub 104 and the individual rotor blades 101 attached at the hub 104, in a position where the drive train axis 117 coincides with the rotor axis 118 (see Fig. 6). In a typical embodiment shown in Fig. 4, the hinge axis 201 is oriented in a vertical direction such that the front part of the rotor can be tilted outwards by an action of an actuator device 500.

It is noted here, albeit not shown in the Figures, that the at least one hinge 200 may be clamped to at least one of the nacelle structure 103 and the hub 104 such that the hinge may be dismounted in an easy way. The tiltable hinge portion 203 may be tilted by means of the actuator device 500 adapted for tilting the tiltable portion 203 about the hinge axis 201 between a closed position where the rotor axis 118 coincides with an axis of the drive train, i.e. the drive train axis 117, and an open position, where the rotor and the hub, respectively, is offset from the drive train 300 (see Fig. 2). At least one hinge 200 may be mounted detachably at the nacelle structure 103. Such kind of detachable mounting of the at least one hinge 200 at the nacelle structure 103 and/or the hub 104 allows for easy installation and deinstallation of the entire hinge 200 in case of required maintenance, service and repair work.

Furthermore, a support crane may be provided in order to support, hold and lift a front part of the drive train, e.g. the hub 104 together with the individual rotor blades 101 attached at the hub, at different heights and/or away from the other drive train components. Such kind of support crane may be attached at mounting positions of the nacelle structure 103 (not shown in the Figures).

In addition to that, sliding bars may be provided that allow a removal of components of the drive train 300 out of the nacelle structure 103. The sliding bars (not shown in the Figures) may be attached at the nacelle structure 103. It is noted here that the sliding bars may be provided inside or outside the nacelle structure 103.

Fig. 5 is another side view of the nacelle structure 103 which is structured in a goose neck shape, according to a typical embodiment. In contrast to the situation shown in Fig. 3 (closed position), Fig. 5 exhibits an open position, i.e. a position where components of the drive train 300 (Fig. 2) are accessible. As the hinge axis 201 of the hinge 200 is oriented vertically, the hub 104 together with the individual rotor blades 101 may be tilted to a side of the nacelle structure 103, in this case a right side of the nacelle structure 103.

Fig. 6 is the situation showing an open position where components of the drive train 300 are accessible as in Fig. 5, wherein Fig. 6 shows the opened position of the hub 104 together with the individual rotor blades 101 from the top of the nacelle structure 103. Fig. 6 illustrates the actuator device 500 in more detail. In the typical embodiment shown in Fig. 6, the actuator device 500 is provided as a hydraulic means wherein an actuator rod 502 and an actuator cylinder 501 are provided.

The actuator rod 502 slides within the actuator cylinder 501 and is moved by a hydraulic pressure of e.g. oil within the actuator cylinder 501. Such kind of hydraulic cylinder/hydraulic rod or hydraulic cylinder/piston arrangement is suitable for tilting the tiltable portion about the hinge axis 201 between a closed position where the rotor axis coincides with an axis of the drive train, and the open position where the rotor is offset from the drive train (situations shown in Fig. 5 and 6).

It is noted here, albeit not shown in Figs. 5 and 6, that the hinge axis 201 may be oriented horizontally, wherein the actuator device 500 is then adapted for pivoting the tiltable position towards at least one of a top side and a bottom side of the nacelle structure 103.

The rotor support device according to a typical embodiment may furthermore include a crane structure adapted for lifting at least one component of a drive train of the wind turbine. The situations shown in Figs. 5 and 6 correspond to holding the rotor at a constant height above ground wherein the rotor support device is adapted for supporting a center of gravity of the rotor or the hub 104 together with the individual rotor blades 101, respectively.

Albeit not shown in the Figures, the actuator device 500 may be provided as at least one of a hydraulic means, a motor-driven push-and-pull assembly, a manually operated rack and a worm drive gearing.

The drive train 300 may be arranged at heights different from a height of the rotor axis 118 during this step of accessing the at least one component of the wind turbine 100. At least one component of the drive train 300 of the wind turbine 100 may be repaired during the step of accessing the at least one component of the wind turbine 100. Moreover, the hinge 200 may be detachably mounted at the nacelle structure 103 and the hub 104, respectively.

The hinge 200 may be adjustable in such a way that it allows the hinge 200 to position the hub 104 in front of the rotor shaft 112. Furthermore, it is noted here that other ways of aligning the hub 104 with respect to the rotor shaft 112 may be provided such as, but not restricted to, using a bolt pattern of the rotor coupling 115.

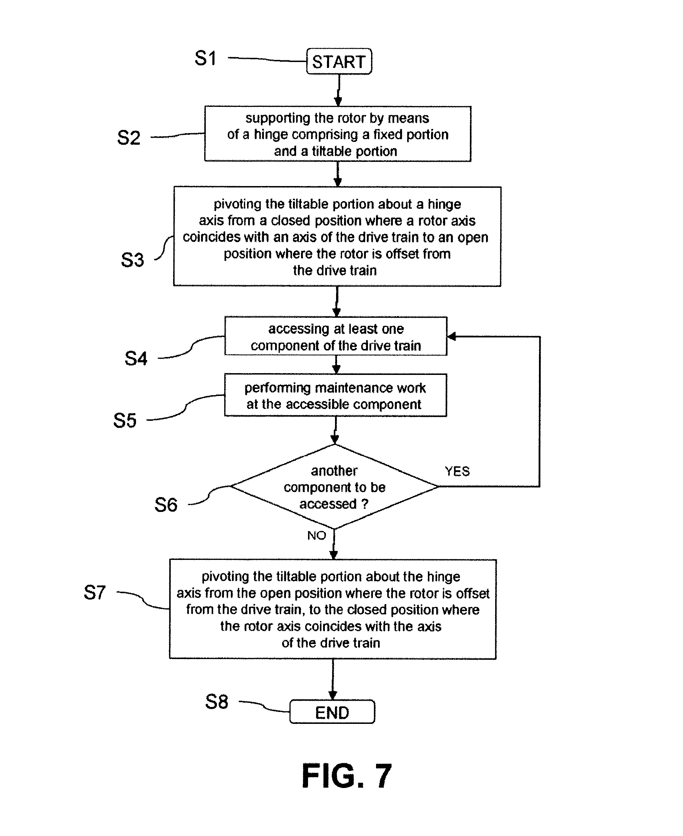

Fig. 7 is a flowchart illustrating a method for accessing at least one component of a drive train 300 of a wind turbine 100 having a rotor and a nacelle structure 103, according to a typical embodiment.

The overview flowchart includes eight individual steps S1, ..., S8. At a step S1, the procedure is started. A following step S2 is provided in order to support the rotor of the wind turbine 100 by means of a hinge 200 including a fixed hinge portion 202 and a tiltable hinge portion 203.

Then, the procedure advances to a step S3 where the tiltable hinge portion 203 is pivoted about the hinge axis 201 from a closed position where the rotor axis 118 coincides with the axis of the drive train 300 (i.e. the drive train axis 117) to an open position where the rotor is offset from the drive train 300. Thus, the open position of the rotor permits access to the hub and related components such as, but not restricted to, pitch drives, pitch controllers, etc.

Once the open position has been reached by action of the actuator device 500, the at least one component of the drive train 300 may be accessed in a step S4. In case of an enclosed nacelle structure 103 as it is the case in space frame or goose neck design, the accessible components of the drive train may be removed towards the front, i.e. towards the rotor side of the drive train. The at least one hinge 200 may be attached at the nacelle structure 103 such that the rotor may remain up-tower while the drive train 300 or at least components of the drive train 300 may be removed. The rotor may remain at a same height as in the closed position or it may be lifted up and down to different heights.

After the at least one component of the drive train 300 has been accessed in the step S4, a following step S5 is for forming maintenance work, repair work and/or service work at the accessible component.

Then, the procedure advances to a step S6 where it is determined whether another component to be accessed shall be accessed. If it is determined at the step S6 that another component should be accessed ("YES" in the step S6), the procedure returns to the step S4, and the steps S4 and S5 are repeated, i.e. another component of the drive train 300 is accessed and again maintenance, service work and/or repair work is performed at the accessed component.

If it is determined in the step S6 that no other component should be accessed ("NO" in the step S6), the procedure advances to a step S7 where the tiltable hinge portion 203 of the hinge 200 is pivoted about the hinge axis 201 from the open position where the rotor is offset from the drive train (see Figs. 5 and 6 and the respective description herein above) to the closed position where the rotor axis 118 coincides with the axis 117 of the drive train 300, as shown in Figs. 3 and 4 detailed in the pertaining description herein above. The procedure advances to a step S8 where it is ended.

The method for accessing the at least one component of a drive train 300 of the wind turbine 100 and the rotor support device adapted for supporting a rotor of a wind turbine 100 while accessing the at least one component of said wind turbine 100 according to one or more typical embodiments described herein above permit a reduction in costs and maintenance work during accessing and repairing components of a drive train 300 of a wind turbine 100.

A tall crane for removing the rotor or the hub 104 together with the individual rotor blades 101, respectively, is not necessary. Thus, lower repair costs and lower maintenance costs with regard to drive train components of a wind turbine may be provided.

This written description uses examples to disclose the invention, including the preferred mode, and also to enable any person skilled in the art to practice the described subject-matter, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope is defined by the claims, and may include such modifications and other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A rotor support device adapted for supporting a rotor of a wind turbine while accessing at least one component of said wind turbine, the rotor support device comprising:
   a hinge comprising a fixed portion and a tiltable portion, said fixed portion adapted for mounting at a nacelle structure of said wind turbine and said tiltable portion adapted for holding said rotor of said wind turbine and for being tilted about a hinge axis; and
   an actuator device adapted for pivoting the tiltable portion about the hinge axis between a closed position where a rotor axis coincides with an axis of the drive train, and an open position where the rotor is offset from the drive train.
2. The rotor support device in accordance with clause 1, wherein the hinge axis is oriented vertically and wherein the actuator device is adapted for pivoting the tiltable portion towards a lateral side of the nacelle structure.
3. The rotor support device in accordance with any preceding clause, wherein the hinge axis is oriented horizontally and wherein the actuator device is adapted for pivoting the tiltable portion towards at least one of a top side and a bottom side of the nacelle structure.
4. The rotor support device in accordance with any preceding clause, wherein the actuator device is at least one of a hydraulic means, a motor-driven push-and-pull assembly, a manually operated rack, and a worm drive gearing.
5. The rotor support device in accordance with any preceding clause, wherein the rotor support device further comprises a crane structure adapted for lifting at least one component of a drive train of the wind turbine.
6. The rotor support device in accordance with any preceding clause, wherein the rotor support device further is adapted for holding a center of gravity of the rotor at a constant height above ground.
7. The rotor support device in accordance with any preceding clause, further comprising a rotor coupling adapted for detachably connecting the hub to the rotor shaft.
8. The rotor support device in accordance with any preceding clause, further comprising a rotor lock adapted for locking the rotor when the hub is detached from the rotor.
9. A wind turbine comprising a rotor having at least one rotor blade and a hub, a drive train, a nacelle structure and a rotor support device adapted for supporting the rotor while accessing at least part of the drive train or hub, the rotor support device comprising:
   a hinge comprising a fixed portion and a tiltable portion, said fixed portion adapted for mounting at the nacelle structure of said wind turbine and said tiltable portion adapted for holding said rotor of said wind turbine and for being tilted about a hinge axis; and
   an actuator device adapted for pivoting the tiltable portion about the hinge axis between a closed position where a rotor axis coincides with an axis of the drive train, and an open position where the rotor is offset from the drive train.
10. The wind turbine in accordance with any preceding clause, wherein the hinge axis is oriented vertically and wherein the actuator device is adapted for pivoting the tiltable portion towards a lateral side of the nacelle structure.
11. The wind turbine in accordance with any preceding clause, wherein the hinge axis is oriented horizontally and wherein the actuator device is adapted for pivoting the tiltable portion towards at least one of a top side and a bottom side of the nacelle structure.
12. The wind turbine in accordance with any preceding clause, wherein the actuator device is at least one of a hydraulic means, a motor-driven push-and-pull assembly, a manually operated rack, and a worm drive gearing.
13. The wind turbine in accordance with any preceding clause, wherein the rotor support device further comprises a crane structure adapted for lifting at least one component of a drive train of the wind turbine.
14. The wind turbine in accordance with any preceding clause, wherein comprising the nacelle structure is provided as a goose neck structure.
15. A method for accessing at least one component of a drive train or hub of a wind turbine having a rotor and a nacelle structure, the method comprising:
   supporting the rotor by means of a hinge comprising a fixed portion and a tiltable portion, said fixed portion adapted for mounting at the nacelle structure and said tiltable portion adapted for holding said rotor;
   pivoting the tiltable portion about the hinge axis from a closed position where a rotor axis coincides with an axis of the drive train to an open position where the rotor is offset from the drive train;
   accessing the at least one component of the wind turbine; and pivoting the tiltable portion about the hinge axis from the open position where the rotor is offset from the drive train to the closed position where the rotor axis coincides with the axis of the drive train.
16. The method in accordance with any preceding clause, wherein at least one component of a drive train of the wind turbine is repaired and/or inspected and/or exchanged during the step of accessing the at least one component of the wind turbine.
17. The method in accordance with any preceding clause, wherein the tiltable portion is tilted by means of an actuator device adapted for tilting the tiltable portion about the hinge axis between a closed position where a rotor axis coincides with an axis of the drive train.
18. The method in accordance with any preceding clause, wherein the at least one hinge is detachably mounted at the nacelle structure.
19. The method in accordance with any preceding clause, wherein the drive train is arranged at heights different from the rotor axis during the step of accessing the at least one component of the wind turbine.
20. The method in accordance with any preceding clause, wherein the center of gravity of the rotor is kept at a constant height above ground during the steps of pivoting the tiltable portion about the hinge axis.

## Claims

1. A rotor support device adapted for supporting a rotor of a wind turbine (100) while accessing at least one component of said wind turbine (100), the rotor support device comprising:
a hinge (200) comprising a fixed portion (202) and a tiltable portion (203), said fixed portion (202) being adapted for being mounted at a nacelle structure (103) of said wind turbine (100) and said tiltable portion (203) being adapted for holding said rotor of said wind turbine (100) and for being tilted about a hinge axis (201); and
an actuator device (500) adapted for pivoting the tiltable portion (203) about the hinge axis (201) between a closed position where a rotor axis (118) coincides with an axis (117) of the drive train (300), and an open position where the rotor is offset from the drive train (300).

2. The rotor support device in accordance with claim 1, wherein the hinge axis (201) is oriented vertically and wherein the actuator device (500) is adapted for pivoting the tiltable portion (203) towards a lateral side of the nacelle structure (103).

3. The rotor support device in accordance with any preceding claim, wherein the hinge axis (201) is oriented horizontally and wherein the actuator device (500) is adapted for pivoting the tiltable portion (203) towards at least one of a top side and a bottom side of the nacelle structure (103).

4. The rotor support device in accordance with any preceding claim, wherein the actuator device (500) is at least one of a hydraulic means, a motor-driven push-and-pull assembly, a manually operated rack, and a worm drive gearing.

5. The rotor support device in accordance with any preceding claim, wherein the rotor support device further comprises a crane structure adapted for lifting at least one component of a drive train (300) of the wind turbine (100).

6. The rotor support device in accordance with any preceding claim, further comprising a rotor coupling adapted for detachably connecting the hub to the rotor shaft (112).

7. The rotor support device in accordance with any preceding claim, further comprising a rotor lock adapted for locking the rotor when the hub is detached from the rotor (104).

8. A method for accessing at least one component of a drive train (300) of a wind turbine (100) having a rotor and a nacelle structure (103), the method comprising:
supporting the rotor by means of a hinge (200) comprising a fixed portion (202) and a tiltable portion (203), said fixed portion (202) being adapted for being mounted at the machine and said tiltable portion (203) being adapted for holding said rotor;
pivoting the tiltable portion (203) about the hinge axis (201) from a closed position where a rotor axis (118) coincides with an axis of the drive train (300) to an open position where the rotor is offset from the drive train (300);
accessing the at least one component of the wind turbine (100); and
pivoting the tiltable portion (203) about the hinge axis (201) from the open position where the rotor is offset from the drive train (300) to the closed position where the rotor axis (118) coincides with the axis of the drive train (300).

9. The method in accordance with claim 8, wherein the drive train (300) is arranged at heights different from the rotor axis (118) during the step of accessing the at least one component of the wind turbine (100).

10. The method in accordance with claim 8 or claim 9, wherein the tiltable portion (203) is tilted about a vertical axis towards a lateral side of the nacelle structure (103).
